(19) **Europäisches Patentamt**

**European Patent Office**

**Office européen des brevets**

(11) **EP 1 425 517 B1**

(12) **FASCICULE DE BREVET EUROPEEN**

(45) Date de publication et mention
de la délivrance du brevet:
**05.04.2006 Bulletin 2006/14**

(51) Int Cl.:
***F16C 39/06*** *(2006.01)*

(21) Numéro de dépôt: **02774900.1**

(22) Date de dépôt: **05.09.2002**

(86) Numéro de dépôt international:
**PCT/FR2002/003015**

(87) Numéro de publication internationale:
**WO 2003/021123 (13.03.2003 Gazette 2003/11)**

(54) **DISPOSITIF ET PROCEDE DE COMPENSATION AUTOMATIQUE DE PERTURBATIONS SYNCHRONES**

VORRICHTUNG UND METHODE ZUR AUTOMATISCHEN KOMPENSATION VON SYNCHRONEN STÖRUNGEN

DEVICE AND METHOD USED TO AUTOMATICALLY COMPENSATE FOR SYNCHRONOUS DISTURBANCES

(84) Etats contractants désignés:
**DE FR GB IT SE**

(30) Priorité: **06.09.2001 FR 0111562**

(43) Date de publication de la demande:
**09.06.2004 Bulletin 2004/24**

(73) Titulaire: **SOCIETE DE MECANIQUE MAGNETIQUE**
**F-27950 Saint-Marcel (FR)**

(72) Inventeurs:
• **TAMISIER, Vincent**
**F-27200 Vernon (FR)**
• **CARRERE, François**
**F-95250 Beauchamp (FR)**
• **FONT, Stéphane**
**F-94140 Alfortville (FR)**

(74) Mandataire: **Thévenet, Jean-Bruno et al**
**Cabinet Beau de Loménie**
**158, rue de l'Université**
**75007 Paris (FR)**

(56) Documents cités:
DE-A- 3 120 691      DE-A- 4 227 014
US-A- 4 121 143      US-A- 4 839 550
US-A- 4 912 387      US-A- 5 400 256

**Description**

**Domaine de l'invention**

La présente invention concerne un dispositif et un procédé de compensation active des composantes fondamentales, harmoniques ou sous-harmoniques d'une perturbation de la vitesse de rotation d'un rotor en suspension magnétique dans une machine tournante. L'invention concerne plus particulièrement la compensation de perturbations fondamentales, harmoniques ou sous-harmoniques dont la fréquence correspond à une fréquence de résonance mécanique du système.

**Art antérieur**

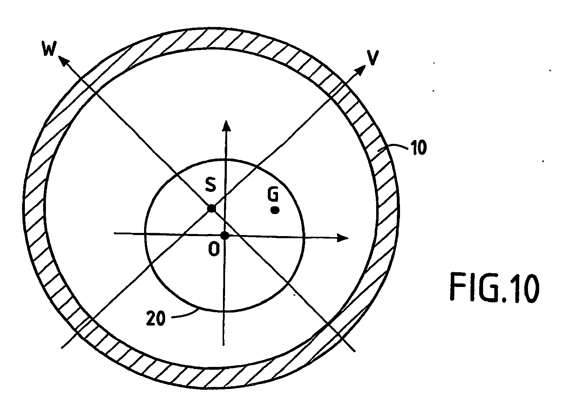

Les systèmes de machines tournantes équipées de paliers magnétiques actifs comprennent principalement un arbre rotatif ou rotor, des élecboaimants disposés autour du rotor formant une partie stator de la machine, des détecteurs de position radiale du rotor et une électronique d'asservissement qui vise à maintenir le rotor dans une position de consigne. De tels systèmes sont décrits notamment dans les brevets français FR 2 094 326 et FR 2149 644.
Ces systèmes subissent des perturbations harmoniques de la fréquence de rotation (fondamental $f_0$, harmoniques supérieures $kf_0$ ou inférieures $\frac{1}{k} f_0$, avec k entier positif), qui peuvent provenir d'un mauvais centrage des détecteurs, de forces extérieures harmoniques créées par le mode d'utilisation (nombre de dents de l'outil pour les applications d'usinage, entraînement d'une roue de compresseur, ...), de défauts de détection de la position lors de la fabrication du rotor, du balourd ou des non-linéarités des systèmes de commande (seuil ou saturation) pour l'asservissement
Parmi les sources de perturbations harmoniques qui existent dans de tels systèmes, le balourd constitue un défaut incontournable pour les machines tournantes. Comme illustré sur la figure 10 qui représente une vue en coupe d'un rotor 20 maintenu en suspension magnétique à l'intérieur d'un palier magnétique 10 formé d'un élément stator équipé d'électro-aimants et de détecteurs de position, le balourd traduit le déséquilibre du rotor dû au fait que l'axe d'inertie G de ce dernier n'est pas sur l'axe de rotation géométrique O. En fonctionnement, le balourd entraîne des vibrations de l'axe géométrique O du rotor autour du centre géométrique S du palier qui est déterminé par les détecteurs et qui représente l'axe de rotation imposé par le palier. La différence entre l'axe d'inertie G du rotor et l'axe de rotation S imposé par le palier est issue des imperfections d'équilibrage du rotor. Supprimer le balourd consiste donc à rendre confondu l'axe de rotation S du palier avec l'axe d'inertie G du rotor.
En mécanique, lorsqu'on cherche à s'affranchir de l'influence du balourd, on agit sur l'axe d'inertie par enlèvement ou adjonction de masse sur le rotor avec une phase par rapport à un repère lié au rotor; le balourd est la masse à compenser pour ramener l'axe d'inertie sur l'axe de rotation. Avec un palier magnétique actif, on peut agir directement sur la position de l'axe de rotation. Cependant, lors d'une montée en vitesse de rotation, l'amplitude du signal d'écart de position mesuré par les détecteurs passe par un maximum qu'on appelle résonance quand la fréquence de rotation égale la fréquence propre de palier, fréquence propre liée à la fréquence de coupure de l'asservissement, généralement basse fréquence, c'est à dire inférieure à 200 Hz. On parle alors de vitesse critique de rotation ou mode rigide. Lors du franchissement d'une vitesse critique, l'amplitude du signal de commande des amplificateurs des paliers passe par un maximum. La réaction du système bouclé à cette perturbation se manifeste par des vibrations synchrones.
Il existe plusieurs raisons possibles pour lesquelles on peut souhaiter contrer l'influence du balourd sur le système bouclé :

- éliminer les vibrations synchrones, pendant toute la montée en vitesse afin de garantir un minimum de vibrations pour le processus d'utilisation,
- diminuer le coût d'équilibrage mécanique des rotors,
- éviter une surconsommation des électro-aimants et/ou une saturation des amplificateurs lors du franchissement d'une vitesse critique, d'où un gain sur l'électronique de puissance, et
- optimiser la puissance pour compenser les perturbations différentes des perturbations synchrones pour des machines dont la vitesse de rotation est proche de la vitesse critique de palier, comme c'est le cas par exemple dans des applications d'usinage des matériaux type acier pour lesquelles on a besoin de toute la puissance disponible pour l'effort de coupe, et non pour contrer les perturbations synchrones comme le balourd.

Ces objectifs ne sont pas incompatibles entre eux et peuvent être recherchés simultanément
Pour s'affranchir de l'influence d'une perturbation telle que le balourd, tant sur la commande des amplificateurs que sur la position, il faut soit améliorer l'équilibrage du rotor ou accroître la puissance de l'électronique, c'est-à-dire augmenter le coût de production du système, soit appliquer un dispositif de compensation active permettant à la fois de minimiser le coût d'équilibrage tout en optimisant la puissance requise.

Les méthodes d'élimination des vibrations synchrones telles que celles dues au balourd connues à ce jour sont de trois types : compensation en boucle fermée, compensation en boucle ouverte dite "feedforward" et compensation du type adaptatif convergent avec gel du résultat dite "pseudo-feedforward".

La méthode de compensation du type boucle fermée des perturbations synchrones est décrite dans le brevet français FR 2 336 602 ou dans le brevet US 4121 143. Cette méthode permet de s'affranchir de l'influence du balourd, par exemple, mais seulement au-delà des vitesses critiques. En effet, cette méthode et son dispositif associé ne peuvent être mis en oeuvre que si la vitesse de rotation est supérieure à la vitesse critique d'au moins 20 %. Ce procédé d'élimination des vibrations dues au balourd peut rendre le système bouclé instable lorsque la vitesse de rotation est inférieure à ce seuil. Les objectifs requis en terme de normes telles que la norme "API" (Institut Américain du Pétrole) et de minimisation de puissance ne peuvent être atteints avec cette méthode. Une méthode de compensation en boude fermée est également décrite dans le brevet US 4 912 387. Cependant, la méthode divulguée ne concerne que l'amélioration de la compensation synchrone par annulation des harmoniques ("noise canceller"). Le problème du passage des vitesses critiques n'est pas abordé.

Les méthodes du type compensation en boude ouverte ("feedforward") sont basées sur un apprentissage, consistant à stocker pour différentes vitesses les déplacements en certains points du rotor. On obtient alors un tableau de valeurs, appelé "matrice d'influence", qui permet ensuite de s'affranchir de l'influence du balourd sur toute la plage de fonctionnement. Cependant, cette matrice est constitutive de l'état du rotor à un moment donné et ne prend pas en compte une éventuelle dérive des paramètres. De plus, dans le cadre d'applications en série, on ne peut se permettre de réaliser un tel apprentissage pour chaque machine, d'autant plus que cet apprentissage nécessite une électronique de commande suffisamment puissante pour franchir les vitesses critiques au moins une fois sans saturer pour créer la matrice d'influence.

Enfin, les méthodes de compensation du type adaptatif convergent ("pseudo-feedforward") consistent à estimer, à partir du signal de position mesuré, un signal de compensation à ajouter au signal de commande en utilisant un algorithme de type gradient, c'est à-dire convergent Un exemple d'une telle méthode est décrit dans le brevet US 5 400 256. Cependant, ce document ne donne aucune indication quant à la rapidité de convergence et le domaine de validité de la compensation en fonction de la vitesse du rotor. Or, dans tout système bouclé, il y a des problèmes de stabilité lors du passage des modes critiques. De plus, ce type de méthode présente l'inconvénient majeur de ne pas pouvoir suivre une évolution de la perturbation synchrone qu'elle estime à partir du moment où l'algorithme a convergé (convergence à une vitesse de rotation fixe). En outre, ce type de méthode ne garantit pas une convergence sans oscillation en l'absence d'une modélisation complète. D'autre part, il est difficile d'appliquer ce genre de méthode à des machines présentant une forte accélération.

Enfin, on connaît d'autres documents, comme les demandes de brevet allemand DE 42 27 014 et DE 3120 691 ou le brevet américain US 4 839 550, qui traitent de l'asservissement de position d'un rotor supporté par des paliers magnétiques, mais aucun de ces documents ne fait état des problèmes d'instabilité qui peuvent être rencontrés lors du passage des vitesses critiques.

En résumé, les méthodes de compensation des perturbations synchrones connues ne sont pas entièrement satisfaisantes car elles présentent l'inconvénient soit de ne pas pouvoir couvrir toute la plage de vitesse de la machine, soit de ne pas pouvoir suivre une évolution ou une dérive de la perturbation synchrone.

## Objet et description succincte de l'invention

La présente invention vise à remédier aux inconvénients précités et à réaliser un dispositif de compensation qui permet, pour des machines à faible ou forte accélération, d'éliminer les vibrations dues aux perturbations synchrones depuis une faible vitesse de rotation en franchissant les vitesse critiques, et ce sans apprentissage préalable.

Ces buts sont atteints grâce à un dispositif de compensation en boucle fermée d'une perturbation synchrone dans une machine tournante comprenant un rotor maintenu en suspension magnétique par au moins un palier magnétique radial muni d'électroaimants pilotés par des amplificateurs, un dispositif de détection radial de la position axiale du rotor, et un circuit d'asservissement en boude fermée relié au dispositif de détection et aux électroaimants et comprenant un circuit de commande d'alimentation des électroaimants qui délivre un signal de commande aux amplificateurs en réponse à des signaux délivrés par le dispositif de détection pour maintenir le rotor dans une position axiale prédéterminée, caractérisé en ce que le dispositif de compensation comprend des moyens de génération d'un signal de compensation de la perturbation synchrone qui sont insérés dans le circuit d'asservissement avant le circuit de commande d'alimentation pour minimiser la variation du signal de commande vis-à-vis de la perturbation et en ce que les moyens de génération d'un signal de compensation comprennent un moyen d'application d'au moins un angle correctif pour assurer la stabilité de la boude fermée, l'angle étant déterminé en fonction de la variation de phase de la perturbation observée sur une plage de vitesse de rotation déterminée.

Ainsi, l'invention propose un dispositif qui permet d'effectuer une compensation active en boucle fermée avant et pendant le franchissement des vitesses critiques en mode rigide, sans initialisation ou apprentissage préalable, tout en garantissant de consommer un minimum de puissance de commande et de conserver la stabilité du système au passage d'une vitesse critique.

Plus particulièrement, les moyens de génération d'un signal de compensation comprennent des moyens d'extraction d'au moins une composante en fréquence du signal de la perturbation dans le circuit d'asservissement, des moyens de filtrage en basse fréquence et de transformation de ladite composante extraite, et des moyens de modulation de la composante transformée.

Selon un aspect de l'invention, les moyens d'extraction comprennent un circuit de séparation d'au moins une composante sous-harmonique, fondamentale ou harmonique de la vitesse de rotation de la machine, la séparation étant effectuée par démodulation, moindres carrés ou filtrage de Kalman.

Selon une caractéristique de l'invention, les moyens de transformation de la composante extraite comprennent une matrice de rotation pour l'application de l'angle correctif.

Selon une autre caractéristique de l'invention, les moyens de transformation de la composante extraite comprennent des moyens d'application d'un déphasage correspondant à l'angle correctif qui peuvent être indus dans les moyens d'extraction ou dans les moyens de modulation.

Selon un aspect particulier de l'invention, la perturbation synchrone est une perturbation issue, d'un balourd présent sur le rotor.

Selon un autre aspect de l'invention, le dispositif de compensation peut être mis en oeuvre à partir d'une fréquence de rotation de 30Hz pour une pompe turbo-moléculaire ou de 100 Hz pour un compresseur d'air.

La présente invention a également pour objet un procédé de compensation en boude fermée d'une perturbation synchrone dans une machine tournante comprenant un rotor maintenu en suspension magnétique par au moins un palier magnétique radial muni d'électroaimants pilotés par des amplificateurs, un dispositif de détection radial de la position axiale du rotor, et un circuit d'asservissement en boude fermée relié au dispositif de détection et aux électroaimants et comprenant un circuit de commande d'alimentation des électroaimants qui délivre un signal de commande aux amplificateurs en réponse à des signaux délivrés par le dispositif de détection pour maintenir le rotor dans une position axiale prédéterminée, caractérisé en ce qu'il comprend une étape de génération d'un signal de compensation de la perturbation synchrone comprenant l'application d'au moins un angle correctif pour assurer la stabilité de la boucle fermée, l'angle étant déterminé en fonction de la variation de phase de la perturbation observée sur une plage de vitesse de rotation déterminée, et une étape d'injection du signal de compensation dans le circuit d'asservissement avant le circuit de commande d'alimentation pour minimiser la variation du signal de commande vis-à-vis de la perturbation.

Plus spécifiquement, l'étape de génération du signal de compensation comprend une étape d'extraction d'au moins une composante en fréquence du signal de la perturbation dans le circuit d'asservissement, une étape de filtrage en basse fréquence de la composante extraite, une étape de transformation de la composante extraite, et une étape de modulation de la composante transformée.

Selon un aspect de l'invention, l'étape d'extraction comprend la séparation d'au moins une composante sous-harmonique, fondamentale ou harmonique de la vitesse de rotation de la machine, la séparation étant effectuée par démodulation, moindres carrés ou filtrage de Kalman.

Selon une caractéristique de l'invention, l'étape de transformation de la composante extraite comprend l'application d'une rotation sur la composante pour l'application de l'angle correctif.

Selon une autre caractéristique de l'invention, l'étape de transformation de la composante extraite comprend l'application d'un déphasage angulaire correspondant à l'angle correctif.

L'application du déphasage angulaire peut être réalisée dans l'étape d'extraction ou dans l'étape de modulation.

Selon un aspect particulier de l'invention, la perturbation synchrone est une perturbation issue d'un balourd présent sur le rotor.

Selon un autre aspect de l'invention, le présent procédé est mis en oeuvre à partir d'une fréquence de rotation de 30 Hz pour une pompe turbo-moléculaire ou de 100 Hz pour un compresseur d'air.

## Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :

- la figure 1 est un schéma simplifié d'une boucle de régulation mettant en oeuvre le principe d'asservissement des paliers magnétiques,
- la figure 2 est un schéma simplifié de la boucle de la figure 1 avec adjonction d'un modèle balourd selon l'invention,
- la figure 3 est un schéma bloc illustrant le principe de compensation selon l'invention,

- la figure 4 est un schéma simplifié d'un premier mode de réalisation du dispositif de compensation active conformément à l'invention,
- la figure 5 est un schéma simplifié d'un deuxième mode de réalisation du dispositif de compensation active conformément à l'invention,
- la figure 6 est un schéma simplifié d'un troisième mode de réalisation du dispositif de compensation active conformément à l'invention,
- la figure 7 est un exemple d'une courbe d'amplitude et de phase d'un diagramme de Bode d'une fonction de sensibilité relevée sur une machine tournante à paliers magnétiques actifs,
- la figure 8 est un exemple d'une courbe de phase d'un diagramme de Bode d'une fonction de sensibilité,
- les figures 9A et 9B sont des diagrammes montrant la variation de commande dans un compresseur d'air à paliers magnétiques actifs respectivement sans et avec le dispositif de l'invention, et
- la figure 10 est une vue schématique en coupe d'un rotor dans un palier magnétique.

## Description détaillée des modes de réalisation de l'invention

La présente invention va être décrite en relation avec son application première, à savoir l'élimination des vibrations dues au balourd. Néanmoins, l'homme du métier pourra envisager sans difficulté, au vu de ce qui suit, l'application de l'invention à toute autre perturbation synchrone ou harmonique de la fréquence de rotation, présente dans une machine tournante équipée de paliers magnétiques contrôlés par des boudes de régulation. Le terme de "perturbation synchrone" ou "perturbation harmonique" désigne tout signal de perturbation dont la fréquence est un multiple de la fréquence de rotation $f_0$ de la machine, c'est à dire un signal qui correspond soit au fondamental $f_0$, soit

à une harmonique supérieure $kf_0$ ou inférieure $\dfrac{1}{k}f_0$ (avec k entier positif).

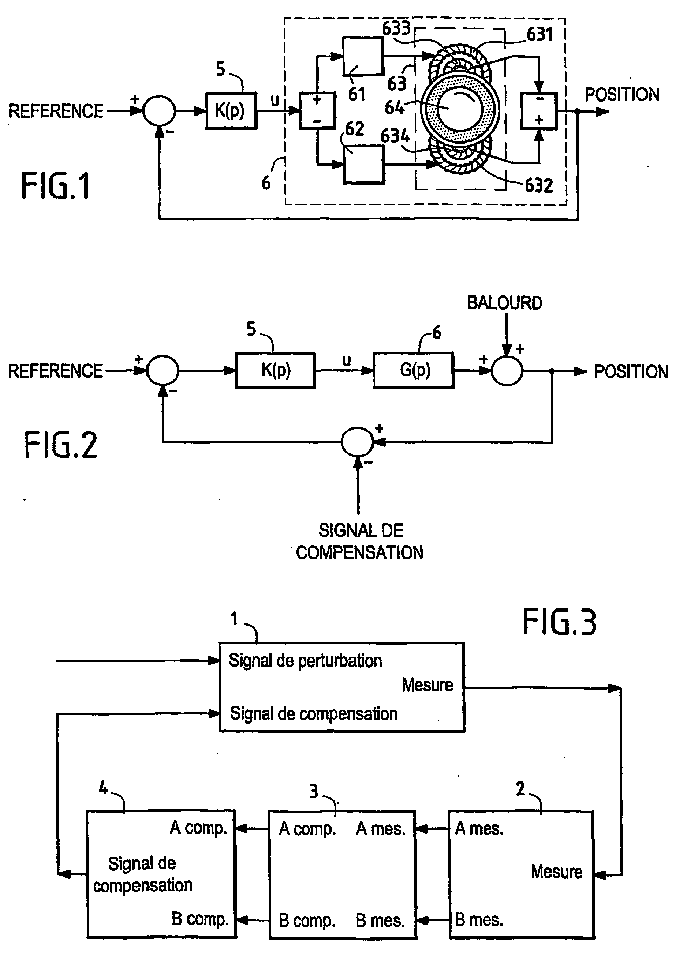

Afin d'expliciter l'invention, il faut tout d'abord expliquer l'influence du balourd sur le système boudé. La figure 1 représente un modèle simplifié de la boude fermée (ou boucle de régulation) qui réalise l'asservissement en position d'un rotor 64 maintenu en suspension magnétique par un palier 63. La boude comprend principalement un correcteur 5 destiné à envoyer un signal de commande $\underline{u}$ en fonction de la position du rotor mesurée et d'un signal de référence. Le signal de commande $\underline{u}$ est donc envoyé au système 6 de pilotage des paliers qui, en réponse au signal $\underline{u}$, pilotent des amplificateurs de courant 61, 62 qui fournissent l'énergie nécessaire aux bobines 631, 632 du palier 63 pour corriger la position du rotor. Le système 6 comprend aussi des détecteurs radiaux 633, 634 qui mesurent la position axiale du rotor dans le plan du palier. Le système 6 transmet donc en sortie le signal de position qui est utilisé dans la boucle comme illustré sur la figure 1. Ce type d'asservissement en boucle fermée ainsi que son fonctionnement dans une machine tournante équipée de paliers magnétiques actifs sont décrits dans les brevets FR 2 094 326 et FR 2 149 644 ou US 3 787 100.

La force de rappel des paliers s'applique sur l'axe d'inertie du rotor, et est fonction de la distance entre l'axe géométrique du rotor et l'axe géométrique du palier (c'est-à-dire la distance OS dans la figure 10). Cette force de rappel du palier sur le rotor induit une réaction opposée de la part du rotor sur le palier et donc sur tout le bâti de la machine. Cette réaction constitue le phénomène des vibrations. Pour éliminer ces vibrations selon l'invention, il faut minimiser la variation des forces de rappel, donc la variation de la commande.

L'asservissement de position induit des modes de résonance basse fréquence pour le système boudé et qui sont excités dès que la vitesse de rotation correspond à la fréquence de ces modes soumis aux effets gyroscopiques. On parle alors de vitesse critique. Lors du franchissement des vitesses critiques, le rotor présente une orbite de plus en plus grande (orbite de précession) et l'asservissement tend à produire une force de compensation de plus en plus élevée qui peut éventuellement aboutir à la saturation des amplificateurs de puissance. Pour minimiser la puissance nécessaire, il faut donc réduire la réaction des paliers due à l'action du balourd qui agit comme une perturbation synchrone sur la commande.

Dans son application la plus directe, l'invention consiste à minimiser la commande des paliers en mode non stationnaire depuis une faible vitesse jusqu'à la vitesse nominale, sans apprentissage, en traversant les vitesses critiques de palier, ce qui a pour effet de supprimer les vibrations dues au balourd, ou, de façon équivalente, éliminer les composantes vibratoires synchrones dans la commande.

Pour cela, il faut tout d'abord définir un modèle de la perturbation due au balourd dans la chaîne de traitement afin de pouvoir déterminer la forme de la compensation à ajouter dans la boucle pour minimiser la commande vis-à-vis de la perturbation engendrée.

Selon une première approche, le balourd peut être vu comme une perturbation en force, additive sur la commande, d'amplitude proportionnelle à la masse du rotor et au carré de la vitesse de rotation, et de phase à l'origine variable en fonction de la vitesse de rotation. La phase à l'origine correspond à un angle qui évolue en fonction de la vitesse de rotation lorsque le centre S se déplace de O vers G. L'inconvénient de ce modèle de balourd vient du fait que connaître l'évolution de la phase à l'origine variable nécessite une connaissance approfondie du système qu'il est très difficile d'obtenir. Il faudrait en effet connaître le lieu du centre de rotation S .

On peut également envisager de modéliser le balourd comme une perturbation additive sur la position, d'amplitude et de phase à l'origine constante tel que représenté sur la figure 2. Ceci correspond au fait que le balourd est un écart géométrique constant entre les centres O et G.

Par souci de simplicité, et puisqu'on ne dispose pas de l'évolution de la phase à l'origine variable, c'est ce dernier modèle qui a été retenu. Dans ce modèle, on suppose que le balourd est parfaitement connu, ce qui équivaut à générer un signal de compensation correspondant au balourd considéré et à l'injecter dans la boude avant le correcteur. On a alors un minimum de variation de commande u, donc un minimum de vibrations synchrones.

Le modèle utilisé ici représente une vision particulière, simplifiée et sur une voie. Pour ce type de modèle on peut considérer le balourd comme une perturbation synchrone de sortie. Cette perturbation est toutefois légèrement variable car il ne s'agit pas d'un modèle immédiat du balourd. Dans le cadre de la présente description, il est plus simple de nommer ce signal balourd afin de simplifier la compréhension des phénomènes mais en toute rigueur Il s'agit seulement d'un signal synchrone additif en sortie.

La figure 3 est un schéma fonctionnel qui illustre selon l'invention le principe de la compensation d'une perturbation harmonique, telle que celle due au balourd par exemple dans la boucle de régulation de position du rotor. Les éléments à prendre en compte dans la boude fermée sont le (ou les) point(s) d'injection de la perturbation visée, éventuellement variable, le (ou les) point(s) de mesure, le (ou les) point(s) d'injection des signaux de compensation, et les transferts entre les entrées et sorties ici considérés pour adapter le signal de compensation aux variations de gain et de phase dans lesdits transferts. Sur la figure 3, le bloc 1 représente la chaîne de traitement du signal telle qu'illustrée en figure 1 qui reçoit en entrée un signal de perturbation et le signal de compensation associé et délivre en sortie un signal de mesure de position du rotor. Entre la mesure et la réinjection de signaux, trois étapes sont franchies, chacune correspondant respectivement aux blocs 2, 3 et 4 de la figure 3. Dans le bloc 2, on réalise la séparation d'une harmonique (respectivement sous-harmonique ou fondamental), par démodulation, méthode des moindres carrés ou filtrage de Kalman, qui va permettre de construire un signal de compensation représentatif de cette harmonique (respectivement sous-harmonique ou fondamental). Le bloc 3 correspond à la chaîne de transformation du signal de compensation qui sera explicitée plus loin. Enfin, dans le bloc 4, on effectue une modulation du signal de compensation transformé avant de le réinjecter dans la chaîne de traitement du bloc 1.

Le bloc 2 permet donc de ramener en basse fréquence un signal pertinent (sous-harmonique, fondamental ou harmonique considéré). Ainsi, appelons $\Omega$ la vitesse de rotation et considérons l'extraction de l'harmonique $H_n$ (respectivement sous-harmonique ou fondamental), c'est-à-dire la partie du signal évoluant à une pulsation $n\Omega$ (avec n=k ou $\frac{1}{k}$, k entier positif). Cette harmonique peut s'écrire:

$$H_n = A_{Hn} \cos(n\Omega t) + B_{Hn} \sin(n\Omega t)$$

On appelle information pertinente du signal harmonique $H_n$ les paramètres $A_{Hn}$ et $B_{Hn}$. L'extraction de ce signal pertinent, qui dépend de l'harmonique visée, peut se faire par une démodulation, une méthode des moindres carrés ou un filtrage de Kalman.

Selon un premier mode de réalisation, le bloc 3 inclut un filtre passe-bas et une matrice de rotation. Leurs réglages seront expliqués plus loin. Le bloc 4 permet de reconstituer un signal de compensation à la pulsation considérée, à partir du signal pertinent issu des calculs et transformations effectués dans le bloc 3. En d'autres termes, Il s'agit de la "fonction inverse" du bloc 2.

Deux autres variantes, mathématiquement équivalentes au premier mode de réalisation, sont envisageables selon les fonctions que l'on souhaite inclure dans le bloc 3. Ainsi, selon un deuxième mode de réalisation, l'opération géométrique qui consiste à appliquer une rotation au signal pertinent mesuré peut être reportée dans le bloc 4, lequel alors effectue une remodulation à l'aide de signaux sinus et cosinus déphasés d'un angle $\theta$ égal à l'angle de la rotation de la matrice du bloc 3 du premier mode de réalisation, ce qui donne, en sortie du bloc 4, un signal de forme :

$$(A_{comp}, B_{comp}) \Rightarrow (A \cos(n\Omega t - \theta), B \sin(n\Omega t - \theta))$$

Alternativement, selon un troisième mode de réalisation, cette opération géométrique peut être reportée dans le bloc 2, lequel alors effectue une démodulation à l'aide de signaux sinus et cosinus déphasés d'un angle θ égal à l'angle de la rotation de la matrice du bloc 3 du premier mode de réalisation, ce qui donne comme vecteur en sortie du bloc 2 de forme :

$$(A_{mes}, B_{mes}) \Rightarrow (A_0 \cos(\theta) - B_0 \sin(\theta), A_0 \sin(\theta) + B_0 \cos(\theta))$$

avec

$$\text{Mesure} = A_0 \cos(n\Omega t) + B_0 \sin(n\Omega t)$$

Le déphasage θ appliqué dans ces deuxième et troisième modes de réalisation peut être réalisé également lorsque la démodulation est effectuée par la méthode des moindres carrés ou un filtrage de Kalman.

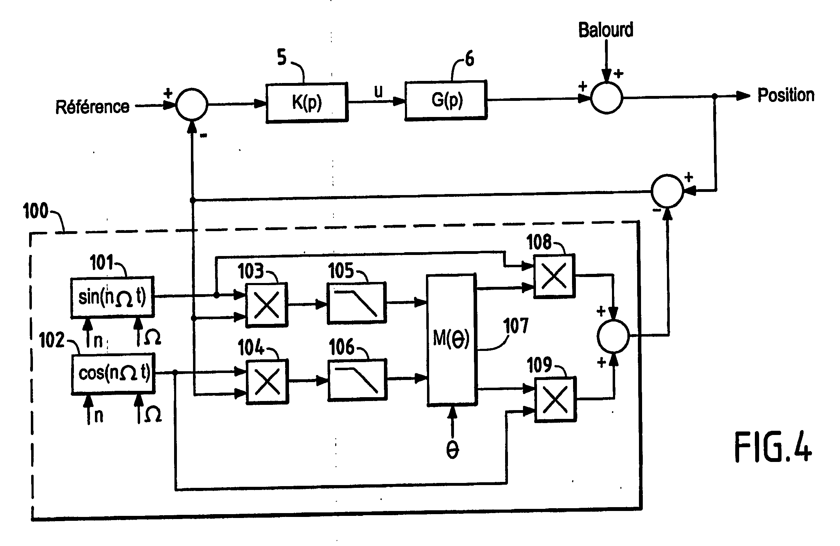

Les figures 4, 5 et 6 représentent des exemples de circuits de compensation respectivement selon les premier, deuxième et troisième modes de réalisation de l'invention qui permettent de générer un signal de compensation dans la boucle d'asservissement de position.

Sur la figure 4, le signal de mesure de position est prélevé dans un circuit 100 pour être multiplié avec une composante sinus et une composante cosinus toutes deux évoluant à une pulsation nΩ (Ω étant la vitesse de rotation) et étant issues respectivement d'un générateur de signal sinus 101 et un générateur de signal cosinus 102 et envoyé en entrée d'une première et d'une deuxième unités de multiplication 103 et 104. Les deux générateurs de signal 101 et 102 qui, avec leur unité de multiplication associée, forment le circuit d'extraction du signal pertinent comportent chacun un moyen de référence à la fréquence de rotation Ω et à la valeur du facteur n qui, comme vu plus haut, détermine en fonction de sa valeur la sous-harmonique ($n = \dfrac{1}{k}$, k entier positif), le fondamental (n=1) ou l'harmonique (n=k, k entier positif) que l'on souhaite extraire du signal de position dans la boude.

La composante sinus ainsi obtenue en sortie de l'unité de multiplication 103 est ensuite filtrée dans un filtre passe-bas 105 et la composante cosinus obtenue en sortie de l'unité de multiplication 104 est aussi filtrée dans un filtre passe-pas 106. Les filtres 105 et 106 filtrent chacun une composante sensiblement continue qui, comme expliqué plus haut, correspond respectivement aux paramètres $A_{Hn}$ et $B_{Hn}$ constituant l'information pertinente du signal harmonique $H_n$ extrait. On applique alors sur les deux composantes issues du filtrage une rotation d'un angle θ au moyen d'une matrice de rotation 107. La rotation appliquée peut être représentée sous la formé du produit matriciel suivant :

$$\begin{pmatrix} A_{comp} \\ B_{comp} \end{pmatrix} = \begin{pmatrix} \cos\theta & -\sin\theta \\ \sin\theta & \cos\theta \end{pmatrix} \times \begin{pmatrix} A_{Hn} \\ B_{Hn} \end{pmatrix}$$

Les deux composantes résultantes des transformations appliquées dans la matrice de rotation sont alors respectivement transmises à une troisième et quatrième unités de multiplication 108 et 109 qui multiplient chacune la composante issue des transformations avec le signal généré par le générateur de signal sinus 101 et le générateur de signal cosinus 102. Cette dernière opération permet de moduler à la pulsation considérée nΩ chacune des deux composantes du signal de compensation transformées avant de les additionner en un signal commun qui est injecté dans la boucle d'asservissement.

Le circuit 100 permet donc d'extraire un signal harmonique (respectivement sous-harmonique ou fondamental) d'une perturbation synchrone considérée et de lui appliquer les transformations nécessaires avant sa réinjection dans la boucle en tant que signal de compensation de la perturbation. Le circuit 100 étant placé dans la boude entre la mesure de position et le correcteur 5, il est alors possible d'extraire, des données de mesure, les composantes pertinentes de la perturbation synchrone considérée et de réinjecter un signal de compensation adapté dans la boucle avant le correcteur de sorte que celui-ci ne prendra pas en compte la perturbation visée, minimisant ainsi la commande des paliers vis-à-vis de cette perturbation.

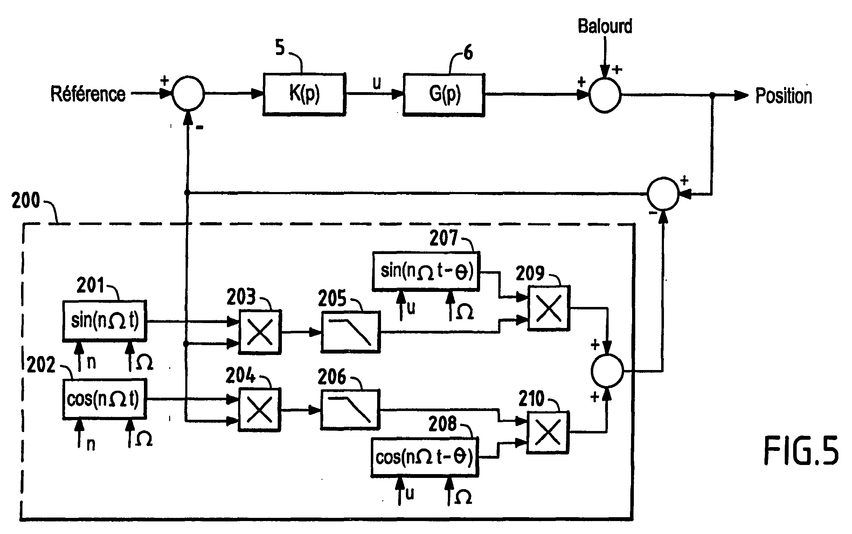

La figure 5 montre un exemple de circuit selon le deuxième mode de réalisation de l'invention. Le circuit 200 représenté en figure 5 diffère principalement du circuit 100 de la figure 4 en ce qu'il ne comprend plus de matrice de rotation, la rotation d'angle θ étant ici appliquée sous forme d'un déphasage équivalent lors de la remodulation des composantes du signal de compensation au niveau des unités de multiplication 209 et 210. L'extraction des composantes pertinentes de l'harmonique considérée ainsi que leur filtrage sont réalisés de la même façon que dans le mode de réalisation décrit en relation avec la figure 4. A ce titre, dans le circuit 200, il est mis en oeuvre comme dans la figure 4, un générateur de signal sinus de pulsation nΩ 201 et un générateur de signal cosinus de pulsation nΩ 202. Chacun d'entre eux est relié à une unité de multiplication 203 ou 204 pour extraire du signal de mesure, lui aussi en entrée des unités de multiplication 203 et 204, les composantes sinus et cosinus de l'harmonique visée. Deux filtres passe-bas 205 et 206 filtrent respectivement les paramètres $A_{Hn}$ et $B_{Hn}$ constituant l'information pertinente du signal harmonique $H_n$ extrait. Dans ce mode de réalisation, l'angle θ est donc appliqué sous forme d'un déphasage équivalent à une rotation d'un angle θ au moyen des générateurs de signaux 207 et 208 qui génèrent respectivement un signal sinus et un signal cosinus tout deux à une pulsation nΩ comme les générateurs 201 et 202 mais déphasés de l'angle θ. Le signal de compensation réinjecté dans la boude résultant de la somme des deux composantes transformées et remodulées est mathématiquement équivalent à celui généré par le circuit 100 de la figure 5.

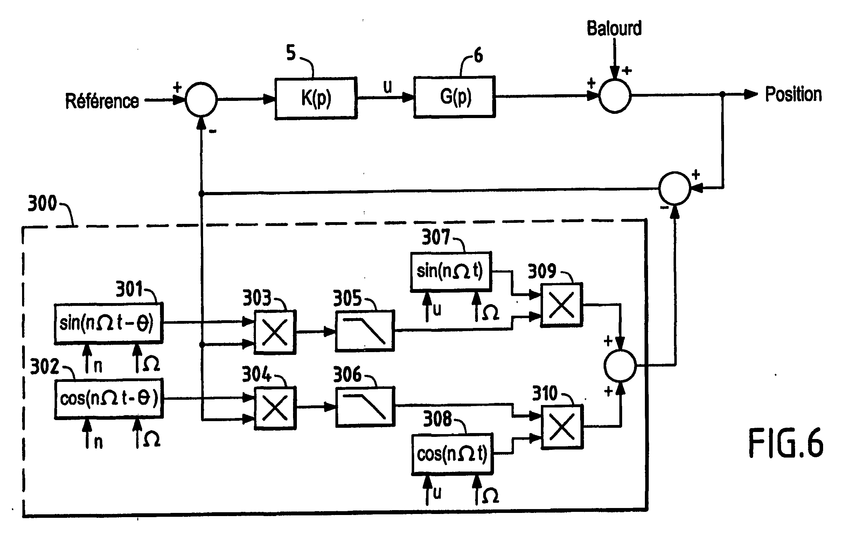

Le circuit 300 de la figure 6 est sensiblement le même que celui de la figure 5 et tous les éléments identiques à ceux de la figure 5 ont les mêmes fonctions que celles précédemment décrites. La seule différence réside dans le fait que le déphasage d'un angle θ est ici appliqué au niveau de la démodulation de l'harmonique visée au moyen des générateurs de signaux 301 et 302 qui délivrent respectivement des signaux sinus et cosinus à la pulsation nΩ qui sont déphasés d'un angle θ. Les autres éléments du circuit 300 communs à ceux de la figure 4 fonctionnent de la même façon que dans le circuit 200 et le signal de compensation délivré par le circuit 300 est mathématiquement équivalent à celui généré par le circuit 100 ou 200.

Dans les trois modes de réalisation du circuit de génération d'un signal de compensation présentés, un angle correctif θ est appliqué au signal de compensation, que ce soit sous la forme d'une rotation ou d'un déphasage. Cette correction vient du fait que la perturbation due au balourd varie en phase autour du passage des modes de palier. Grâce à la modélisation a priori définie plus haut à partir du comportement du rotor sous l'effet d'une force de balourd, il est possible de déterminer un angle de correction qui fait converger le système boudé. Ceci permet d'assurer la stabilité (convergence) de la boude fermée et, par conséquent, d'appliquer la compensation sur toute la plage de vitesse du rotor, en particulier lors du passage des vitesses critiques (modes des paliers).

Le balourd tel qu'il est défini dans le modèle de la présente invention peut s'observer à travers ce que l'on appelle la fonction de "sensibilité" ou "d'erreur" du système.

On appelle fonction de sensibilité d'un système asservi la fonction de transfert :

$$S(j\omega) = \frac{1}{1 + G(j\omega)K(j\omega)} \,,$$

où G et K représentent respectivement la fonction de transfert du système de pilotage des paliers 6 et du correcteur 5 conformément au schéma-bloc de la figure 1.

Si l'on considère le modèle de balourd adopté en figure 2 sans le signal de compensation dans la boucle, lorsqu'on effectue une mesure du signal de position ou du signal d'erreur en l'absence de signal de référence, on mesure une réponse du système bouclé au balourd. La fonction de sensibilité agit comme un "filtre" à travers lequel on observe le balourd, avec son lot de transformations en gain et phase. C'est la modification de la phase du signal balourd tel qu'il est observé au travers de la fonction de sensibilité qu'il va nous falloir corriger.

Ainsi, la détermination de la valeur de l'angle correctif θ à appliquer au signal de compensation nécessite un relevé de la fonction de sensibilité du système pour chaque palier le cas échéant, de manière à pouvoir restaurer le signal balourd tel qu'il est réellement. A titre d'exemple, la méthode de compensation du type boude fermée des perturbations synchrones décrite dans le brevet français FR 2 336 602 ne tient pas compte de l'évolution de la phase de la fonction de sensibilité et pour cause: après le franchissement des modes de palier, c'est à dire à une vitesse supérieure à la vitesse critique d'au moins 20%, donc là où la méthode peut être mise en oeuvre sans risque de déstabilisation du système, la phase de la fonction de sensibilité est nulle. Aussi, le signal de position qu'on observe en tant que réponse est en phase avec le signal balourd.

Pour effectuer un relevé de la fonction de sensibilité du système, il faut choisir un signal d'excitation ξ puis relever un signal α de réponse. Il suffit ensuite de faire le rapport :

$$S(j\omega) = \frac{\alpha}{\xi}$$

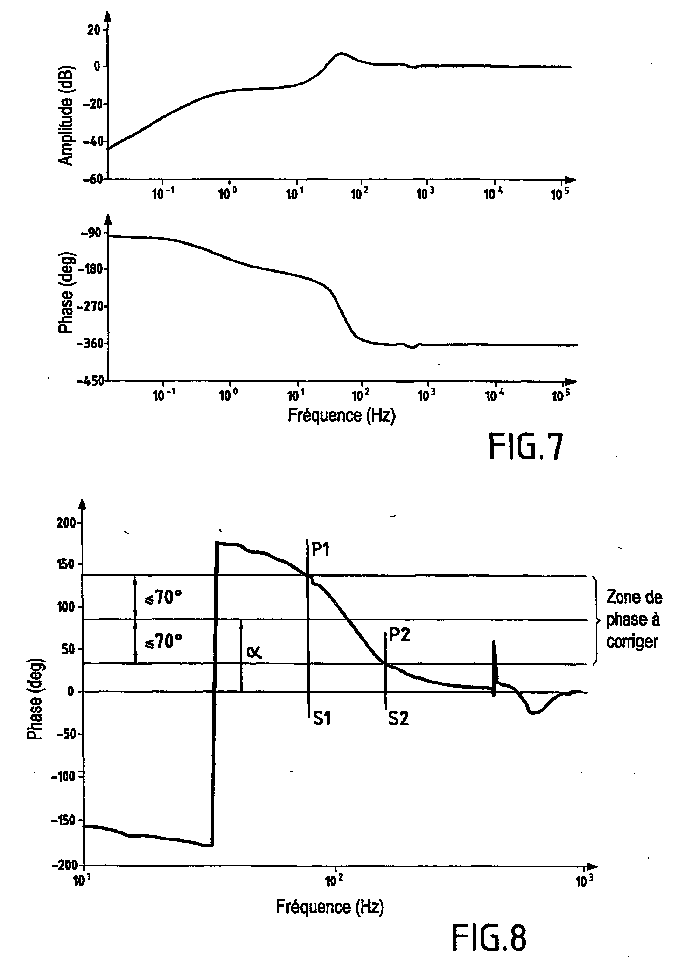

Néanmoins, il faut savoir que si le système est bouclé avec un signe "+" et que, par conséquent, le correcteur présente un gain global négatif, on mesurera alors - $S(j\omega)$, c'est à dire l'opposé de la fonction de sensibilité, déphasée de $\pi$ par rapport à $S(j\omega)$. A titre indicatif, l'allure du diagramme de Bode d'une fonction de sensibilité relevé à l'arrêt sur une machine tournante équipée de paliers magnétiques actifs est donnée en figure 7. Si la fonction de sensibilité, représentant ici le balourd observé à l'arrêt ou à une vitesse donnée, montre une variation de gain, celle-ci doit être également compensée afin d'appliquer précisément une transformation inverse, qui peut être assimilée à une homothétie d'angle θ et de facteur d'amplification g, à l'image du balourd que l'on observe afin de retrouver celui-ci. Le gain des filtres peut être réglé pour correspondre au facteur d'amplification de l'homothétie à appliquer.

Un exemple de détermination d'un angle correctif θ est maintenant commenté en relation avec la figure 8 qui représente l'évolution de la phase d'une fonction de sensibilité en-translation relevée à l'arrêt sur une machine tournante équipée de paliers magnétiques actifs.

Sur la courbe de phase de la figure 8, on choisit un seuil d'enclenchement $S_1$ = 80 Hz pour le dispositif de compensation de l'invention. Cette valeur permet a posteriori de s'assurer qu'un seul angle de rotation corrective sera nécessaire. Le seuil d'arrêt choisi pour le dispositif de compensation, noté $S_2$ est spécifié à $S_2$ =170 Hz, pour une vitesse maximale Ω de 230 Hz. On considère à la figure 8, la courbe de phase de la fonction de sensibilité en translation. On appelle respectivement $P_1$ et $P_2$ les points de la courbe de phase situés aux fréquences $S_1$ et $S_2$.

On écrit comme suit les coordonnées de ces points :

$$P_1(S_1 = 80 \text{ Hz}, \varphi_1 = 137°)$$

$$P_2(S_2 = 170 \text{ Hz}, \varphi_2 = 33°)$$

Il s'agit donc de "rectifier" la phase de la fonction de sensibilité entre ces deux points à l'aide d'un seul angle de rotation corrective. On peut donner l'interprétation suivante de ces points : lors d'une rotation à 80 Hz (respectivement 170 Hz), l'angle de compensation idéal vaut 137° (respectivement 33°). Or il a été démontré que le système de compensation en boucle fermée selon l'invention reste convergent et attractif vers un point de stabilité avec un seul angle de compensation, qui se définit comme suit (interprétation graphique de la figure 8) :

$$\alpha = \varphi_2 + \left(\frac{\varphi_1 - \varphi_2}{2}\right)$$

$$\alpha = \frac{\varphi_1 + \varphi_2}{2}$$

$$\alpha = 85°$$

Le but est de répartir au mieux la compensation pour les deux extrémités de la zone de phase où on souhaite mettre en oeuvre l'invention. Ainsi, une rotation d'angle $\alpha$ = 85° permet de minimiser la commande en compensant le balourd entre $S_1$ et $S_2$ bien que cet angle ne corresponde qu'à la phase du point milieu $P_m$ sur la figure 8, c'est à dire que la compensation n'est idéale que pour ce point. On met ainsi en évidence l'attractivité du point de convergence.

Toutefois, cette convergence a des limites. Considérant la phase du système compensé $|\varphi - \alpha| = \varphi_c$, la limite théorique d'instabilité est telle que $\varphi_c$ = 90°. Plus on se rapproche de ce point, plus on risque d'observer une déstabilisation du système. Une phase compensée $\varphi_c \leq 70°$ constitue alors un bon compromis, et on s'assurera donc que :

$$\left|\phi_1 - \alpha\right| \leq \phi_{lim} = 70°$$

$$\left|\phi_2 - \alpha\right| \leq \phi_{lim} = 70°$$

Dans le cas présent, on constate que la valeur de l'angle de rotation corrective retenue satisfait bien aux critères de stabilité évoqués.

Par conséquent, l'invention est conçue pour pouvoir tolérer des variations des signaux de perturbation et une mesure déformée par sa propagation dans les transferts des boudes de régulation. Dans le cas du traitement du balourd, on se contente d'une connaissance partielle des transferts des boucles de régulation qui est suffisante pour le réglage des paramètres de l'invention et la prédétermination de la stabilité du système. Ainsi, on se contente de connaître un point de la courbe de phase du diagramme de Bode des transferts qui correspondent à la fonction de sensibilité décrite plus haut dans le cas du balourd. Comme il a été démontré dans l'exemple ci-dessus, si on choisit judicieusement ce point suite à une étude de robustesse, la stabilité du système est garantie sur toute la plage de fonctionnement sélectionnée préalablement

En ce qui concerne la détermination du gain et de la fréquence de coupure des filtres passe-bas utilisés dans le système de l'invention, c'est une question de compromis. La première chose à prendre en compte concerne le filtre qui sert à filtrer les harmoniques après la démodulation. En effet, on retrouve le compromis classique liant la robustesse et les performances : la convergence sera d'autant plus rapide que la fréquence de coupure du filtre sera élevée, mais alors on risque de laisser passer des harmoniques issues de la démodulation. D'autre part, un gain fort favorise une bonne qualité de la convergence, mais il faut toutefois éviter les phénomènes de débordement numérique. A titre d'exemple, on choisit un gain de 50 et une fréquence de coupure de 10 Hz pour une machine à faible accélération comme une pompe turbo-moléculaire. Pour une machine à accélération rapide de type broche d'usinage, on prend également un gain élevé de 50 mais une fréquence de coupure de 0,1 Hz.

On a vu que pour un système peu gyroscopique, des relevés à l'arrêt suffisent Le traitement du cas d'un système plutôt gyroscopique est un peu plus complexe. Dans ce dernier cas, il ne s'agit plus de relever des fonctions de sensibilité à l'arrêt, mais de relever le véritable transfert par lequel est observé à chaque instant le balourd. Pour cela, il faut, pour différentes vitesses de rotation, relever la fonction de sensibilité puis, pour chacune de ces vitesses, relever le point fréquentiel de la courbe correspondant à la vitesse de rotation.

On peut résumer cela de la manière suivante : un tel transfert dépendant à la fois de la fréquence $\omega$ et de la vitesse de rotation $\Omega$ peut s'écrire $S(\omega,\Omega)$. Le transfert qui nous est nécessaire est constitué d'un ensemble de points $S(\omega_1, \Omega_1)$ pour différentes vitesses $\Omega_1$. Il s'agit d'un transfert fictif (c'est une construction point par point) mais c'est le filtrage fréquentiel synchrone exact au travers duquel est observé le balourd.

Le dispositif de compensation objet de l'invention qui vient d'être décrit peut être mis en oeuvre sous forme d'un circuit électronique. Les fonctions du dispositif de compensation de l'invention peuvent être également mise en oeuvre par un code programmé et stocké dans un microprocesseur programmable du type processeur pour le traitement des signaux numériques (DSP). Toutefois, l'utilisation d'un microprocesseur programmable n'est pas impérative. Un circuit intégré dédié à ces fonctions tel qu'un "ASIC" convient également. Dans ce cas, toutes les fonctions de traitement utiles à l'invention qui sont programmées et stockées dans le microprocesseur seront mises en oeuvre dans un circuit intégré spécifiquement câblé pour réaliser ces fonctions.

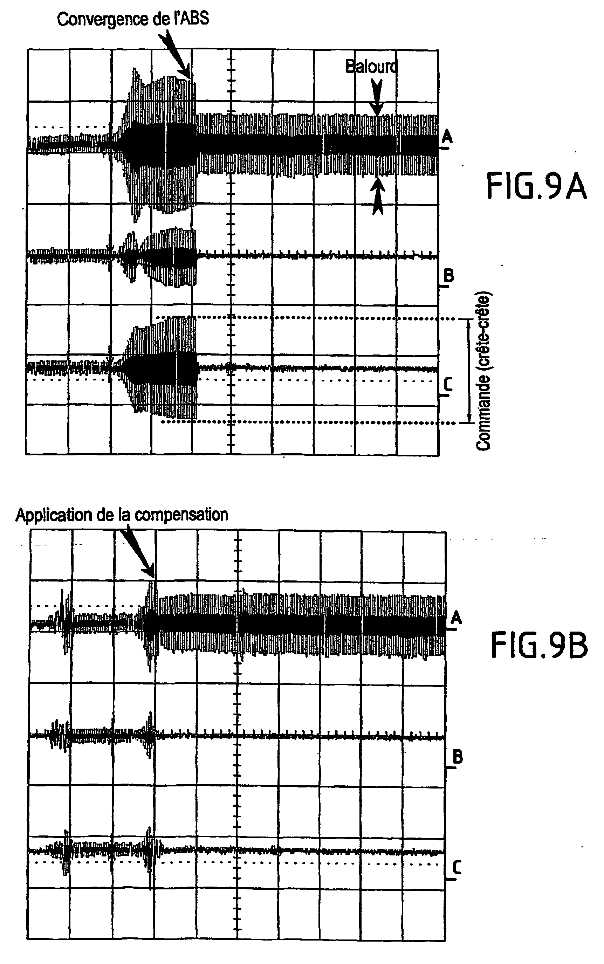

Les figures 9A et 9B représentent des essais menés sur un compresseur d'air (rotor) où la présente invention a été appliquée à l'élimination des vibrations dues au balourd. Sur chacune des figures 9A et 9B, les signaux A, B et C représentent respectivement la position, la commande sur un second axe de translation et la commande dans l'axe considérée en translation sur lequel un fort balourd a été adjoint La figure 9A montre une montée en vitesse (correspondant à la surtension visible sur les signaux) avec application du dispositif de compensation du type boucle fermée des perturbations synchrones décrit dans le brevet français FR 2 336 602. Sur cette figure, on observe très nettement la surtension sur la commande (signaux B et C) lors du franchissement du mode de résonance. Au delà du mode, après la mise en marche du dispositif de compensation, la position mesurée correspond à l'écart entre l'axe d'inertie et l'axe géométrique du rotor. On constate qu'alors la commande des paliers est minimale. Dans cet exemple, l'invention a pour but de pouvoir obtenir les mêmes caractéristiques de fonctionnement mais sans attendre d'avoir franchi le mode de résonance, donc la surtension due à la vitesse critique. C'est ce qui est illustré en figure 9B. La figure 9B montre une montée en vitesse dans les mêmes conditions que l'exemple illustré en figure 9A mais avec application du dispositif de compensation active de l'invention. La commande observée (signaux B et C) est minimale durant toute la durée de la montée en vitesse après la mise en fonctionnement du dispositif de l'invention. Le compresseur d'air tourne autour de son axe d'inertie à partir de 60 Hz de vitesse de rotation, c'est à dire nettement en dessous de sa vitesse critique de mode rigide qui n'est alors plus observable.

La mise en oeuvre du dispositif de compensation peut se faire dès l'apparition d'une information vitesse stable. En pratique, on fixe la vitesse de mise en oeuvre autour de 50 à 70% de la vitesse critique selon les applications. Par exemple, pour une pompe turbo-moléculaire, le dispositif est mis en oeuvre à partir de 30 Hz avec un mode de palier à 55 Hz, alors que pour un compresseur d'air, il est mis en fonctionnement à partir de 100 Hz pour un mode de palier à 130 Hz.

D'une manière plus générale, l'invention permet d'éliminer toute perturbation harmonique additive aussi bien sur la réponse que sur la commande dès lors que sa fréquence est connue. Même si l'application première concerne l'élimination des vibrations dues au balourd, il est possible de prendre en compte une ou plusieurs harmoniques ou sous-harmoniques de la fréquence de rotation vues comme des signaux injectés dans chaque boude de régulation. Il est donc possible de rejeter des signaux fondamentaux, harmoniques ou sous-harmoniques même lorsque leurs caractéristiques (amplitude, phase) évoluent au cours du temps. L'invention permet la recherche permanente des caractéristiques des perturbations synchrones dont on souhaite s'affranchir et ceci même en présence de variations de celles-ci ainsi que d'incertitudes et de variations de la chaîne de mesure qui dépend principalement de la vitesse de rotation. Ces qualités de robustesse du procédé et du dispositif de l'invention permettent une annulation précise sans avoir à expliciter un modèle complexe dans le système, ce qui autorise une mise en oeuvre particulièrement économique en terme de temps de calcul.

**Revendications**

1.  Dispositif de compensation en boucle fermée d'une perturbation synchrone dans une machine tournante comprenant un rotor (64) maintenu en suspension magnétique par au moins un palier magnétique radial (63) muni d'électroaimants (631, 632) pilotés par des amplificateurs (61, 62), un dispositif de détection radial (633, 634) de la position axiale du rotor, et un circuit d'asservissement en boude fermée relié audit dispositif de détection et auxdits électroaimants et comprenant un circuit de commande (5) d'alimentation des électroaimants qui délivre un signal de commande (u) auxdits amplificateurs en réponse à des signaux délivrés par le dispositif de détection pour maintenir le rotor dans une position axiale prédéterminée, **caractérisé en ce que** ledit dispositif de compensation comprend des moyens de génération d'un signal de compensation (100; 200; 300) de la perturbation synchrone, lesdits moyens étant insérés dans le circuit d'asservissement avant le circuit de commande d'alimentation (5) pour minimiser la variation du signal de commande vis-à-vis de la perturbation et **en ce que** lesdits moyens de génération d'un signal de compensation comprennent un moyen d'application d'au moins un angle correctif (θ) pour assurer la stabilité de la boucle fermée, ledit au moins angle correctif étant déterminé en fonction de la variation de phase de la perturbation observée sur une plage de vitesse de rotation déterminée.

2.  Dispositif selon la revendication 1, **caractérisé en ce que** les moyens de génération d'un signal de compensation comprennent des moyens d'extraction (101, 102; 201, 202; 301, 302) d'au moins une composante en fréquence du signal de la perturbation dans le circuit d'asservissement, des moyens de filtrage en basse fréquence (105, 106; 205, 206; 305, 306) et de transformation de ladite composante extraite, et des moyens de modulation (108, 109; 209, 210; 309, 310) de la composante transformée.

3.  Dispositif selon la revendication 2, **caractérisé en ce que** lesdits moyens d'extraction (101, 102; 201, 202; 301, 302) comprennent un circuit de séparation d'au moins une composante sous-harmonique, fondamentale ou harmonique de la vitesse de rotation de la machine, ladite séparation étant effectuée par démodulation, moindres carrés ou filtrage de Kalman.

4.  Dispositif selon la revendication 2 ou 3, **caractérisé en ce que** lesdits moyens de transformation de la composante extraite comprennent une matrice de rotation (107) pour l'application de l'angle correctif (θ) sur le signal de compensation.

5.  Dispositif selon la revendication 2 ou 3, **caractérisé en ce que** lesdits moyens de transformation de la composante extraite comprennent des moyens d'application d'un déphasage correspondant à l'angle correctif (θ).

6.  Dispositif selon la revendication 5, **caractérisé en ce que** lesdits moyens d'application d'un déphasage sont indus dans les moyens d'extraction (101, 102; 201, 202; 301, 302).

7.  Dispositif selon la revendication 5, **caractérisé en ce que** lesdits moyens d'application d'un déphasage sont inclus dans les moyens de modulation du signal transformé (108, 109; 209, 210; 309, 310).

8. Dispositif selon l'une quelconque des revendications 1 à 7, **caractérisé en ce que** la perturbation synchrone est une perturbation issue d'un balourd présent sur le rotor.

9. Dispositif selon l'une quelconque des revendications 1 à 8, **caractérisé en ce que** ledit dispositif de compensation est mis en oeuvre à partir d'une fréquence de rotation de la machine tournante de 30 Hz pour une pompe turbo-moléculaire ou 100 Hz pour un compresseur d'air.

10. Procédé de compensation en boude fermée d'une perturbation synchrone dans une machine tournante comprenant un rotor (64) maintenu en suspension magnétique par au moins un palier magnétique radial (63) muni d'électroaimants (631, 632) pilotés par des amplificateurs (61, 62), un dispositif de détection radial (633, 634) de la position axiale du rotor, et un circuit d'asservissement en boucle fermée relié audit dispositif de détection et auxdits électroaimants et comprenant un circuit de commande (5) d'alimentation des électroaimants qui délivre un signal de commande (u) auxdits amplificateurs en réponse à des signaux délivrés par le dispositif de détection pour maintenir le rotor dans une position axiale prédéterminée, **caractérisé en ce qu'**il comprend une étape de génération d'un signal de compensation de la perturbation synchrone comprenant l'application d'au moins un angle correctif (θ) pour assurer la stabilité de la boucle fermée, ledit au moins angle correctif étant déterminé en fonction de la variation de phase de la perturbation observée sur une plage de vitesse de rotation déterminée, et une étape d'injection dudit signal de compensation dans le circuit d'asservissement avant le circuit de commande d'alimentation (5) pour minimiser la variation du signal de commande vis-à-vis de la perturbation.

11. Procédé selon la revendication 10, **caractérisé en ce que** l'étape de génération du signal de compensation comprend une étape d'extraction d'au moins une composante en fréquence du signal de la perturbation dans le circuit d'asservissement, une étape de filtrage en basse fréquence de la composante extraite, une étape de transformation de ladite composante extraite, et une étape de modulation de la composante transformée.

12. Procédé selon la revendication 11, **caractérisé en ce que** l'étape d'extraction comprend la séparation d'au moins une composante sous-harmonique, fondamentale ou harmonique de la vitesse de rotation de la machine, ladite séparation étant effectuée par démodulation, moindres carrés ou filtrage de Kalman.

13. Procédé selon la revendication 11 ou la revendication 12, **caractérisé en ce que** l'étape de transformation de la composante extraite comprend l'application d'une rotation sur ladite composante pour l'application de l'angle correctif (θ) sur le signal de compensation.

14. Procédé selon la revendication 11 ou la revendication 12, **caractérisé en ce que** l'étape de transformation de la composante extraite comprend l'application d'un déphasage angulaire correspondant à l'angle correctif (θ).

15. Procédé selon la revendication 14, **caractérisé en ce que** l'application du déphasage angulaire est réalisée dans l'étape d'extraction.

16. Procédé selon la revendication 14, **caractérisé en ce que** l'application du déphasage angulaire est réalisée dans l'étape de modulation du signal transformé.

17. Procédé selon l'une quelconque des revendications 11 à 16, **caractérisé en ce que** la perturbation synchrone est une perturbation issue d'un balourd présent sur le rotor.

18. Procédé selon l'une quelconque des revendications 11 à 17, **caractérisé en ce qu'**il est mis en oeuvre à partir d'une fréquence de rotation de la machine tournante de 30 Hz pour une pompe turbo-moléculaire ou 100 Hz pour un compresseur d'air.

**Patentansprüche**

1. Kompensationsvorrichtung im geschlossenen Kreislauf für eine synchrone Störung in einer elektrischen Maschine, umfassend einen Rotor (64), der in magnetischer Suspension durch mindestens ein radiales magnetisches Lager (63) gehalten wird, das mit Elektromagneten (631, 632) versehen ist, die durch Verstärker (61, 62) gesteuert werden, eine radiale Erfassungsvorrichtung (633, 634) für die Axialposition des Rotors und eine Regelschaltung im geschlossenen Kreislauf, die mit der Erfassungsvorrichtung und den Elektromagneten verbunden ist und eine Steuerschaltung (5) zur Versorgung der Elektromagneten umfaßt, die ein Steuersignal (u) an die Verstärker als Antwort auf von der Erfassungsvorrichtung gelieferte Signale liefert, um den Rotor in einer vorbestimmten Axialposition zu halten, **dadurch gekennzeichnet, daß** die Kompensationsvorrichtung Mittel zur Erzeugung eines Kompensationssignals (100; 200; 300) für die synchrone Störung umfaßt, wobei diese Mittel in die Regelschaltung vor der Steuerschaltung (5) für die Versorgung eingesetzt sind, um die Veränderung des Steuersignals gegenüber der Störung zu minimieren, und daß die Mittel zur Erzeugung eines Kompensationssignals ein Mittel zum Anlegen mindestens eines Korrekturwinkels ($\theta$) umfassen, um die Stabilität des geschlossenen Kreislaufs zu gewährleisten, wobei der mindestens eine Korrekturwinkel in Abhängigkeit von der Phasenänderung der in einem bestimmten Drehgeschwindigkeitsbereich beobachteten Störung bestimmt wird.

2. Vorrichtung nach Anspruch 1, **dadurch gekennzeichnet, daß** die Mittel zur Erzeugung eines Kompensationssignals Mittel (101, 102; 201, 202; 301, 302) zur Extraktion mindestens einer Frequenzkomponente des Signals der Störung aus der Regelschaltung, Niedrigfrequenzfiltermittel (105, 106; 205, 206; 305, 306) und Umformungsmittel für die extrahierte Komponente und Modulationsmittel (108, 109; 209, 210; 309, 310) für die umgeformte Komponente umfassen.

3. Vorrichtung nach Anspruch 2, **dadurch gekennzeichnet, daß** die Extraktionsmittel (101, 102; 201, 202; 301, 302) eine Schaltung zur Isolierung mindestens einer subharmonischen, fundamentalen oder harmonischen Komponente der Drehgeschwindigkeit der Maschine umfassen, wobei diese Isolierung durch Demodulation, kleinste Fehlerquadrate oder Kaiman-Filterung erfolgt.

4. Vorrichtung nach Anspruch 2 oder 3, **dadurch gekennzeichnet, daß** die Mittel zur Umformung der extrahierten Komponente eine Drehmatrix (107) zum Anlegen des Korrekturwinkels ($\theta$) an das Kompensationssignal umfassen.

5. Vorrichtung nach Anspruch 2 oder 3, **dadurch gekennzeichnet, daß** die Mittel zur Umformung der extrahierten Komponente Mittel zum Anlegen einer dem Korrekturwinkel ($\theta$) entsprechenden Phasenverschiebung umfassen.

6. Vorrichtung nach Anspruch 5, **dadurch gekennzeichnet, daß** die Mittel zum Anlegen einer Phasenverschiebung in die Extraktionsmittel (101, 102; 201, 202; 301, 302) eingeschlossen sind.

7. Vorrichtung nach Anspruch 5, **dadurch gekennzeichnet, daß** die Mittel zum Anlegen einer Phasenverschiebung in die Mittel zur Modulation des umgeformten Signals (108, 109; 209, 210; 309, 310) eingeschlossen sind.

8. Vorrichtung nach einem der Ansprüche 1 bis 7, **dadurch gekennzeichnet, daß** die synchrone Störung eine Störung ist, die von einer auf dem Rotor vorhandenen Unwucht stammt.

9. Vorrichtung nach einem der Ansprüche 1 bis 8, **dadurch gekennzeichnet, daß** die Kompensationsvorrichtung ab einer Drehfrequenz der elektrischen Maschine von 30 Hz für eine Turbomolekularpumpe oder von 100 Hz für einen Luftkompressor eingesetzt wird.

10. Kompensationsverfahren im geschlossenen Kreislauf für eine synchrone Störung in einer elektrischen Maschine, umfassend einen Rotor (64), der in magnetischer Suspension durch mindestens ein radiales magnetisches Lager (63) gehalten wird, das mit Elektromagneten (631, 632) versehen ist, die durch Verstärker (61, 62) gesteuert werden, eine radiale Erfassungsvorrichtung (633, 634) für die Axialposition des Rotors und eine Regelschaltung im geschlossenen Kreislauf, die mit der Erfassungsvorrichtung und den Elektromagneten verbunden ist und eine Steuerschaltung (5) zur Versorgung der Elektromagneten umfaßt, die ein Steuersignal (u) an die Verstärker als Antwort auf von der Erfassungsvorrichtung gelieferte Signale liefert, um den Rotor in einer vorbestimmten Axialposition zu halten, **dadurch gekennzeichnet, daß** es einen Schritt zur Erzeugung eines Kompensationssignals für die synchrone Störung umfaßt, umfassend das Anlegen mindestens eines Korrekturwinkels ($\theta$), um die Stabilität des geschlossenen Kreislaufs zu gewährleisten, wobei der mindestens eine Korrekturwinkel in Abhängigkeit von der Phasenänderung der in einem bestimmten Drehgeschwindigkeitsbereich beobachteten Störung bestimmt wird, und einen Schritt des Einleitens des Kompensationssignals in die Regelschaltung vor der Steuerschaltung (5) zur Versorgung, um die Änderung des Steuersignals gegenüber der Störung zu minimieren.

11. Verfahren nach Anspruch 10, **dadurch gekennzeichnet, daß** der Schritt zur Erzeugung eines Kompensationssignals einen Schritt der Extraktion mindestens einer Frequenzkomponente des Signals der Störung aus der Regelschaltung, einen Schritt der Niedrigfrequenzfilterung und einen Umformungsschritt für die extrahierte Komponente und einen Modulationsschritt für die umgeformte Komponente umfassen.

**12.** Verfahren nach Anspruch 11, **dadurch gekennzeichnet, daß** der Extraktionsschritt die Isolierung mindestens einer subharmonischen, fundamentalen oder harmonischen Komponente der Drehgeschwindigkeit der Maschine umfaßt, wobei diese Isolierung durch Demodulation, kleinste Fehlerquadrate oder Kalman-Filterung erfolgt.

**13.** Verfahren nach Anspruch 11 oder 12, **dadurch gekennzeichnet, daß** der Schritt der Umformung der extrahierten Komponente das Anlegen einer Drehung an die Komponente zum Anlegen des Korrekturwinkels (θ) an das Kompensationssignal umfassen.

**14.** Verfahren nach Anspruch 11 oder 12, **dadurch gekennzeichnet, daß** der Schritt der Umformung der extrahierten Komponente das Anlegen einer dem Korrekturwinkel (θ) entsprechenden Phasenverschiebung umfassen.

**15.** Verfahren nach Anspruch 14, **dadurch gekennzeichnet, daß** das Anlegen der Phasenverschiebung während des Extraktionsschrittes erfolgt.

**16.** Verfahren nach Anspruch 14, **dadurch gekennzeichnet, daß** das Anlegen der Phasenverschiebung während des Schrittes der Modulation des umgeformten Signals erfolgt.

**17.** Verfahren nach einem der Ansprüche 11 bis 16, **dadurch gekennzeichnet, daß** die synchrone Störung eine Störung ist, von einer auf dem Rotor vorhandenen Unwucht stammt.

**18.** Verfahren nach einem der Ansprüche 11 bis 17, **dadurch gekennzeichnet, daß** es ab einer Drehfrequenz der elektrischen Maschine von 30 Hz für eine Turbomolekularpumpe oder von 100 Hz für einen Luftkompressor eingesetzt wird.

**Claims**

**1.** A compensation device for closed loop compensation of a synchronous disturbance in a rotating machine comprising a rotor (64) magnetically suspended by at least one radial magnetic bearing (63) comprising electromagnets (631, 632) driven by amplifiers (61, 62), a radial detector device (633, 634) for sensing the axial position of the rotor, and a closed loop servocontrol circuit connected to said detector device and to said electromagnets and comprising a control circuit (5) for controlling the energization of the electromagnets that supplies a control signal (u) to said amplifiers in response to signals supplied by the detector device to maintain the rotor in a predetermined axial position, which compensation device is **characterised in that** it comprises means (100; 200; 300) for generating a signal for compensating the synchronous disturbance, said means being inserted into the servocontrol circuit ahead of the energization control circuit (5) to minimize variation of the control signal in relation to the disturbance, and **in that** said compensation signal generator means comprise application means for applying at least one correction angle (θ) to ensure the stability of the closed loop, said at least one correction angle being determined as a function of the phase variation of the disturbance observed over a particular range of rotation speeds.

**2.** A device according to claim 1, **characterised in that** the compensation signal generator means comprise extractor means (101, 102; 201, 202; 301, 302) for extracting at least one frequency component of the disturbance signal in the servocontrol circuit, low-frequency filter means (105, 106; 205, 206; 305, 306) for filtering and transforming said extracted component, and modulator means (108, 109; 209, 210; 309, 310) for modulating the transformed component.

**3.** A device according to claim 2, **characterised in that** said extractor means (101, 102; 201, 202; 301, 302) comprise a circuit for separating at least one subharmonic, fundamental frequency or harmonic component of the rotation speed of the machine by demodulation, a least squares method or Kalman filtering.

**4.** A device according to claim 2 or claim 3, **characterised in that** said means for transforming the extracted component comprise a rotation matrix (107) for applying the correction angle (θ) to the compensation signal.

**5.** A device according to claim 2 or claim 3, **characterised in that** said means for transforming the extracted component comprise means for applying a corresponding phase shift to the correction angle (θ).

**6.** A device according to claim 5, **characterised in that** said means for applying a phase shift are included in the extractor means (101, 102; 201, 202; 301, 302).

7. A device according to claim 5, **characterised in that** said means for applying a phase shift are included in the means (108, 109; 209, 210; 309, 310) for modulating the converted signal.

8. A device according to any one of claims 1 to 7, **characterised in that** the synchronous disturbance is a disturbance caused by an imbalance in the rotor.

9. A device according to any one of claims 1 to 8, **characterised in that** said compensation device is activated from a rotating machine rotation frequency of 30 Hz in the case of a turbomolecular pump or 100 Hz in the case of an air compressor.

10. A method of closed loop compensation of a synchronous disturbance in a rotating machine comprising a rotor (64) magnetically suspended by at least one radial magnetic bearing (63) comprising electromagnets (631, 632) driven by amplifiers (61, 62), a radial detector device (633, 634) for sensing the axial position of the rotor, and a closed loop servocontrol circuit connected to said detector device and to said electromagnets and comprising a control circuit (5) for controlling the energization of the electromagnets that supplies a control signal (u) to said amplifiers in response to signals supplied by the detector device to maintain the rotor in a predetermined axial position, which method is **characterised in that** it comprises a step of generating a compensation signal for compensating the synchronous disturbance comprising the application of at least one correction angle (θ) to ensure the stability of the closed loop, said at least one correction angle being determined as a function of the phase variation of the disturbance observed over a particular range of rotation speeds, and a step of injecting said compensation signal into the servocontrol circuit ahead of the energization control circuit (5) to minimize the variation of the control signal in relation to the disturbance.

11. A method according to claim 10, **characterised in that** the step of generating the compensation signal includes a step of extracting at least one frequency component from the disturbing signal in the servocontrol circuit, a step of low-frequency filtering of the extracted component, a step of transforming said extracted component, and a step of modulating the transformed component.

12. A method according to claim 11, **characterised in that** the extraction step comprises the separation of at least one subharmonic, fundamental frequency or harmonic component of the rotation speed of the machine by demodulation, a least squares method or Kalman filtering.

13. A method according to claim 11 or claim 12, **characterised in that** the step of transforming the extracted component includes applying a rotation to said component to apply the correction angle (θ) to the compensation signal.

14. A method according to claim 11 or claim 12, **characterised in that** the step of transforming the extracted component includes applying an angular phase shift corresponding to the correction angle (θ).

15. A method according to claim 14, **characterised in that** the angular phase shift is applied during the extraction step.

16. A method according to claim 14, **characterised in that** the angular phase shift is applied during the step of modulating the converted signal.

17. A method according to any one of claims 11 to 16, **characterised in that** the synchronous disturbance is caused by an imbalance in the rotor.

18. A method according to any one of claims 11 to 17, **characterised in that** it is activated from a rotating machine rotation frequency of 30 Hz in the case of a turbomolecular pump or 100 Hz in the case of an air compressor.

FIG.1

REFERENCE

5

K(p)

u

633

61

63

64

62

634

6

631

632

POSITION

FIG.2

BALOURD

REFERENCE

5

K(p)

u

6

G(p)

POSITION

SIGNAL DE
COMPENSATION

FIG.3

1

Signal de perturbation

Signal de compensation

Mesure

4

Signal de
compensation

A comp.

B comp.

3

A comp.    A mes.

B comp.    B mes.

2

A mes.

Mesure

B mes.

FIG.4

EP 1 425 517 B1

FIG.5

FIG.6

FIG.7

FIG.8

Convergence de l'ABS

Balourd

A

**FIG.9A**

B

Commande (crête-crête)

C

Application de la compensation

A

**FIG.9B**

B

C

FIG.10